Europäisches Patentamt

European Patent Office

Office européen des brevets

(19)

(11) Numéro de publication : **0 059 140**
**B1**

(12)

# FASCICULE DE BREVET EUROPÉEN

(45) Date de publication du fascicule du brevet :
**28.08.85**

(51) Int. Cl.⁴ : **G 01 N 21/85**

(21) Numéro de dépôt : **82400264.6**

(22) Date de dépôt : **15.02.82**

(54) Appareil pour la détection d'un corps dans un fluide en circulation.

(30) Priorité : 16.02.81 FR 8102991

(43) Date de publication de la demande :
01.09.82 Bulletin 82/35

(45) Mention de la délivrance du brevet :
28.08.85 Bulletin 85/35

(84) Etats contractants désignés :
**DE NL**

(56) Documents cités :
DE-B- 1 287 824
FR-A- 2 114 296
GB-A- 1 278 784
US-A- 3 193 355
US-A- 3 635 564
US-A- 3 708 265

(73) Titulaire : **ASSOCIATION POUR LA RECHERCHE ET LE DEVELOPPEMENT DES METHODES ET PROCESSUS INDUSTRIELS (ARMINES)**
**60, Boulevard Saint-Michel**
**F-75272 Paris Cedex 06 (FR)**

(72) Inventeur : **Di Benedetto, Dominique**
**27, rue Virgile**
**F-42100 Saint-Etienne (Loire) (FR)**
Inventeur : **Thomas, Gérard**
**15, rue des Docteurs Charcot**
**F-42100 Saint-Etienne (Loire) (FR)**

(74) Mandataire : **Chevallier, Robert Marie Georges**
**Cabinet BOETTCHER 23, rue La Boétie**
**F-75008 Paris (FR)**

## Description

L'invention concerne un appareil pour la détection de la présence d'un corps dans un fluide en circulation.

De préférence, l'invention est utile pour détecter la présence d'un corps indésirable dans un fluide qui a subi préalablement une opération tendant à le débarrasser de ce corps. Toutefois, cet emploi de l'invention ne doit être considéré comme limitatif. De plus, ainsi qu'il apparaîtra plus loin, l'invention n'est pas limitée non plus à la constatation de l'absence totale ou de la présence du corps en question ; elle peut être mise en œuvre aussi pour détecter la présence de ce corps en quantité supérieure à un niveau de seuil donné, le niveau zéro ou pratiquement égal à zéro étant un cas particulier servant plus fréquemment de référence.

L'invention repose sur le principe de l'absorption des radiations découlant de la présence d'un corps dans un fluide qui a une transparence connue à ces mêmes radiations en l'absence de ce corps ou en présence d'une quantité déterminée de ce dernier.

Ce principe est exploité dans des appareils de mesure appelés colorimètres dont on peut trouver une description dans le brevet français FR-A-2 309 845. Un tel appareil est conçu pour la mesure de la caractéristique colorimétrique de divers constituants liquides. Il est donc d'usage universel, ou au moins capable de couvrir une gamme assez étendue de mesures. Il comprend une lampe qui émet des radiations dans une large bande et qui est associé à un condensateur et à un filtre de référence que l'on remplace en fonction des mesures à faire. Un tel appareil fonctionne de manière discontinue ; il est trop coûteux, en raison de sa conception même, pour être utilisé comme un simple détecteur. En d'autres termes, la fonction de détection est exclue des emplois possibles de cet appareil du fait même de sa structure.

Le document US-A-3 193 355 décrit un procédé et un appareil pour détecter en continu la présence d'ions déterminés dans de l'eau en circulation, à l'aide d'un appareil ayant deux tubulures contenues sur une fraction de leur longueur à l'intérieur d'une enveloppe, de part et d'autre d'une source de lumière, et interposées chacune respectivement entre cette source et des éléments photosensibles. Ce procédé nécessite d'ajouter à l'eau des réactifs chimiques dont la réaction avec les ions provoque un changement de teinte et par conséquent d'absorption de la lumière.

Le but principal de l'invention est d'apporter un appareil analogue à celui du document cité ci-dessus mais s'en distinguant par l'absence de l'adjonction de réactifs et par une conception perfectionnée et simple le rendant parfaitement apte à surveiller de manière continue la présence au-dessus d'un seuil déterminé dans un fluide en circulation d'un corps absorbant un rayon lumineux. L'invention a pour objet un appareil de surveillance d'un fluide en circulation pour la détection d'un corps absorbant entraîné par ce fluide en circulation dans lequel une source émettrice d'une radiation est placée entre deux tubulures cylindriques dont l'une est traversée par le fluide surveillé et l'autre par un fluide de référence, des cellules détectrices de cette radiation sont disposées respectivement derrière chaque tubulure, caractérisé en ce que les deux tubulures sont espacées chacune de la source émettrice d'une distance donnant naissance à un effet de focalisation de ladite radiation par lesdites tubulures et chaque cellule détectrice est disposée dans la zone de focalisation de la tubulure correspondante.

La source, les tubulures, les cellules sont montées dans un bloc dans des logements respectifs appropriés, de préférence chaque tubulure est immobilisée dans son logement à ses deux extrémités opposées à l'aide de joints qui l'entourent et qui sont comprimés contre sa face extérieure.

On utilise avantageusement comme fluide de référence le fluide surveillé, après épuration de celui-ci, et, dans ce cas, un premier et un second épurateur, de préférence identiques, sont raccordés par des canalisations dont une canalisation raccorde la sortie de l'épurateur à la tubulure de référence, une canalisation raccorde cette dernière à l'entrée de l'épurateur et une canalisation raccorde la sortie de cet épurateur à la tubulure du fluide à surveiller.

De préférence, les deux épurateurs sont du type à résine échangeuse et une canalisation supplémentaire ainsi que des vannes appropriées permettent de faire arriver le fluide chargé directement à la tubulure de référence et d'isoler l'épurateur en vue de sa régénération.

On donnera maintenant, uniquement à titre d'exemple, une description d'un appareil de détection selon l'invention et d'une installation utilisant cet appareil. On se reportera au dessin annexé dans lequel :

la figure 1 est une représentation schématique d'un appareil de détection selon l'invention,

la figure 2 est un schéma d'une installation comprenant l'appareil de la figure 1.

Pour donner une description plus concrète de l'invention, on prendra l'exemple d'un appareil destiné à détecter la présence de chrome hexavalent ($Cr^{6+}$) dans les eaux de cuves d'électrolyse qui sont traitées avant d'être rejetées à la rivière, ou autrement.

La législation actuelle impose l'épuration des eaux résiduaires avant leur rejet. Le chrome hexavalent est un corps considéré comme très toxique ; selon les normes actuelles sa présence dans les eaux de rejet ne doit pas dépasser 0,1 mg/l. Il est donc important d'être alerté dès que sa teneur atteint cette valeur afin que l'on remédie aussitôt à la défaillance d'un poste d'épuration qui comprend fréquemment un échangeur d'ions.

Cette surveillance doit être continue et doit être réalisable à l'aide de moyens sûrs et économiques.

La courbe d'absorption d'une solution à 20 ppm de $Cr^{6+}$ présente un pic remarquable à 350 nm qui s'étend de 330 à 410 nm pour une absorption supérieure à 50 %. De plus ce pic est tout-à-fait caractéristique du chrome. Un autre pic d'absorption de $Cr^{6+}$ se remarque à 270 nm mais plusieurs solutions d'autres corps ont également une absorption notable aux environs de cette longueur d'onde.

Il est possible de prendre comme source émettrice de radiations une lampe UV dont le pic spectral est lui-même compris entre 330 et 410 nm. Une telle lampe est disponible dans le commerce ; on peut adopter par exemple une lampe à mercure munie d'un filtre de Wood, ayant le spectre recherché, telle qu'une lampe vendue sous la marque PENRAY de la Société américaine Ultra-Violet Products Incorporated.

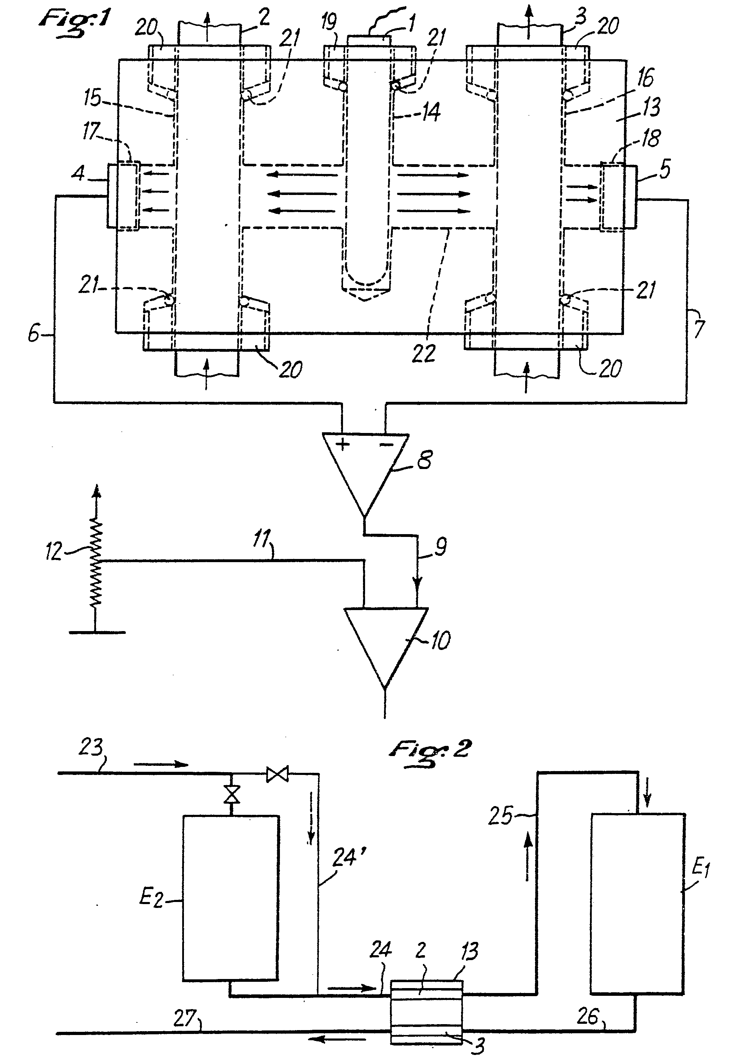

On place cette lampe 1 (figure 1), qui a un diamètre de 0,6 cm et une longueur éclairante de 5,3 cm entre deux tubulures 2, 3 en matière transparente aux radiations de la lampe 1. Les tubulures 2, 3 sont disposées sur deux côtés opposés de la lampe 1 et sont directement exposées aux radiations de celle-ci. La tubulure 2 est raccordée à un circuit (non représenté) de circulation d'un fluide de référence ; ce fluide peut être un liquide totalement exempt de $Cr^{6+}$ ou en contenant une quantité dont la teneur est connue d'une manière absolue ou relative.

La tubulure 3 est raccordée à un circuit (non représenté) de circulation du fluide surveillé, c'est-à-dire, dans cet exemple, du liquide d'une cuve d'électrolyse qui est passé dans un épurateur à résine échangeuse d'ions pour être débarrassé du chrome entraîné, avant son rejet à l'extérieur.

Derrière chaque tubulure 2, 3 par rapport à la lampe 1, est placée une cellule photovoltaïque 4, 5, sensible à l'émission de la lampe 1 et fournissant un courant proportionnel à la puissance reçue. Ces cellules sont disponibles dans le commerce ; par exemple on peut adopter des cellules vendues sous la référence S 876-1010 BQ par la Société japonaise Hamamatsu. A la longueur d'onde de 350 nm, ces cellules ont une sensibilité de 0,15 A/W environ.

Chaque cellule 4, 5 est reliée par des conducteurs appropriés 6, 7 à une entrée correspondante d'un amplificateur différentiel 8 qui peut être, par exemple, du type Teledyne Philbrick 1035 bien connu dans le commerce.

La sortie de l'amplificateur 8 est réunie par un conducteur 9 à une entrée d'un second amplificateur différentiel 10 dont une autre entrée est réunie par un conducteur 11 à un potentiomètre d'étalonnage 12. Après le second amplificateur 10 le circuit électrique est choisi, en fonction des besoins, pour commander une alarme et/ou un appareil indicateur ou enregistreur, selon des dispositions bien connues, par l'intermédiaire d'un relais par exemple.

Il est préférable de placer l'ensemble de la lampe 1 et des tubulures 2, 3 dans un unique bloc 13, en aluminium par exemple, dans lequel on a ménagé un logement borgne 14 pour la lampe 1, des passages 15, 16 pour les tubulures 2, 3, et des logements convenables 17, 18 pour les cellules 4, 5. Le logement 14 et les passages 15, 16 sont élargis à leurs extrémités et filetés pour recevoir des écrous annulaires 19, 20. Ceux-ci se terminent à leur extrémité intérieure par une face en oblique apte à comprimer un joint torique 21 de diamètre convenable qui entoure la lampe 1 ou les tubulures 2, 3. D'autres moyens équivalents de maintien de la lampe 1 et des tubulures 2, 3 dans le bloc 13 pourraient être adoptés.

Un conduit 22 est foré à travers le bloc 13, entre les logements 17, 18 des cellules 4, 5, transversalement aux passages 15, 16 et au trou borgne 14. Ce conduit 22a, en section droite, les dimensions qui conviennent pour diriger le flux de radiations de la lampe 1 à travers les tubulures 2, 3 et de celles-ci aux cellules 4, 5.

Bien que les tubulures 2, 3 puissent avoir un profil quelconque, il est avantageux d'adopter des tubulures cylindriques ayant, par exemple, un diamètre extérieur de 22 mm. Une telle tubulure a un effet de focalisation des radiations qui la traversent en provenance de la lampe 1. En espaçant les tubulures 2, 3 d'une distance de 15 mm de la lampe 1, on peut placer les cellules 4, 5 pour que leur surface active reçoive la totalité du faisceau concentré par cet effet de focalisation.

Pendant le fractionnement, les cellules 4, 5 fournissent des courants égaux, ou différents d'une valeur donnée qui reste constante tant que le fluide à surveiller est dépourvu de Cr hexavalent ou en contient une quantité qui reste constante. Le potentiomètre 12 permet de régler le signal de sortie du second amplificateur 10 à une valeur nulle, ou déterminée, qui ne déclenche aucune alarme. Dès que l'effluent qui traverse la tubulure 3 est plus chargé en chrome, l'absorption des radiations à travers la tubulure 3 s'élève et il se crée un déséquilibre qui, à une valeur prédéterminée, provoque le déclenchement d'une alarme. A l'aide d'un appareil réalisé comme décrit ci-dessus, on a constaté que le seuil de déclenchement de l'alarme peut être réglé à une valeur aussi basse que 0,05 mg/l de chrome hexavalent dans le liquide qui traverse la tubulure 3.

En variante à ce qu'on vient d'expliquer, au lieu d'utiliser en plus du fluide à surveiller un autre fluide servant de référence, il est préférable de procéder de la façon suivante. Avec un seul épurateur E1 (figure 2), on fait passer le même liquide à travers les tubulures 2 et 3. La tubulure 2 est traversée par le liquide chargé en chrome, en amont de l'épurateur E1 et la tubulure 3 est traversée par le liquide épuré, en aval de l'épurateur E1. Quand ce dernier n'agit plus avec la même efficacité, le déséquilibre expliqué plus haut se produit et l'alarme est déclenchée. Toutefois, ce fonctionnement repose sur la supposition que le liquide chargé a une teneur constante en chrome.

Il est préférable d'utiliser avec l'appareil décrit plus haut, deux épurateurs E1, E2, identiques et de les raccorder à l'aide de canalisations appropriées dessinées en trait plein sur la figure 2. L'effluent chargé à épurer arrive par une canalisation 23 à l'épurateur E2 ; à la sortie de celui-ci l'effluent débarrassé de son chrome hexavalent, au moins jusqu'à la limite de tolérance, est conduit par une canalisation 24 à la tubulure 2, qui sert de tubulure de référence, puis une canalisation 25 raccorde cette dernière à l'entrée de l'épurateur E1. A la sortie de celui-ci une canalisation 26 aboutit à la tubulure 3 après quoi une canalisation 27 s'étend jusqu'au lieu de rejet. Tant que l'épurateur E2 agit avec l'efficacité voulue, l'épurateur E1 reste pratiquement sans effet et il se fait à travers les tubulures 2, 3 une absorption sensiblement égale, ou de différence relative constante, des radiations émises par la lampe (non représentée sur la figure 2). Dès que l'effet de l'épurateur E2 commence à s'épuiser, l'effluent qui traverse la tubulure 2 est progressivement plus chargé en chrome mais l'épurateur E1 retient le chrome excédentaire de sorte que l'effluent rejeté par la canalisation 27 reste conforme aux normes d'épuration. En même temps, les radiations sont absorbées davantage à travers la tubulure 2. Le déséquilibre entre les signaux fournis par les cellules (non représentées sur la figure 2) finit par provoquer l'alarme.

A ce moment, grâce à une canalisation supplémentaire et à des vannes appropriées, au lieu que l'effluent suive le circuit décrit ci-dessus indiqué par des flèches en trait plein, on lui fait suivre un circuit indiqué par une flèche en trait interrompu de façon qu'il arrive d'abord grâce à une canalisation 24' à la tubulure 2 pour être conduit par la canalisation 25 à l'épurateur E1 et traverse la canalisation 3 avant d'être rejeté par la canalisation 27.

L'appareil est particulièrement avantageux quand les épurateurs E1 et E2 sont du type à résine échangeuse, ainsi qu'il est connu. Ces épurateurs sont eux-mêmes connus et ne font pas partie de l'invention ; il n'est pas nécessaire de les décrire en détail. Pendant le changement de la circulation, comme expliqué ci-dessus, on peut procéder à la regénération de la résine de l'épurateur E2 et aussitôt après reprendre le circuit initial à travers les deux épurateurs. Pendant la circulation modifiée, le réglage de l'appareil détecteur est corrigé en conséquence.

De nombreuses variantes sont possibles à l'appareil décrit ci-dessus. Dans tous les cas, on se sert du même fluide avant épuration et après épuration pour l'alimentation en continu des tubulures 2 et 3, en évitant la nécessité de disposer d'un fluide spécial de référence.

## Revendications

1. Appareil de surveillance d'un fluide en circulation pour la détection d'un corps absorbant entraîné par ce fluide en circulation dans lequel une source émettrice (1) d'une radiation est placée entre deux tubulures (2, 3) cylindriques dont l'une (3) est traversée par le fluide surveillé et l'autre, ci-après nommée tubulure de référence (2), est traversée par un fluide de référence, des cellules (4, 5) détectrices de cette radiation sont disposées respectivement derrière chaque tubulure (2, 3), caractérisé en ce que les deux tubulures (2, 3) sont espacées chacune de la source (1) émettrice d'une distance donnant naissance à un effet de focalisation de ladite radiation par lesdites tubulures et chaque cellule détectrice (4, 5) est disposée dans la zone de focalisation de la tubulure correspondante.

2. Appareil selon la revendication 1 dans lequel la source (1), les tubulures (2, 3) et les cellules (4, 5) sont montées dans un bloc (13) dans des logements respectifs (14, 17, 18) appropriés, caractérisé en ce que chaque tubulure (2, 3) est immobilisée dans son logement à ses deux extrémités opposées à l'aide de joints (21) qui l'entourent et qui sont comprimés contre sa face extérieure.

3. Appareil selon la revendication 1 avec lequel on utilise comme fluide de référence le fluide surveillé après épuration de celui-ci, caractérisé en ce qu'il comprend des premier (E2) et second (E1) épurateurs, de préférence identiques, raccordés par des canalisations dont une canalisation (24) raccorde la sortie du premier épurateur (E2) à la tubulure de référence (2), une canalisation (25) raccorde cette dernière à l'entrée du second épurateur (E1) et une canalisation (26) raccorde la sortie de ce second épurateur (E1) à la tubulure (3) du fluide surveillé.

4. Appareil selon la revendication 3 caractérisé en ce que les deux épurateurs (E1, E2) sont du type à résine échangeuse et une canalisation supplémentaire (24') ainsi que des vannes appropriées permettent de faire arriver le fluide chargé directement à la tubulure de référence (2) et d'isoler le premier épurateur (E2) en vue de sa régénération.

## Claims

1. An apparatus for the supervision of a fluid in flow for the detection of an absorbent body carried along by this fluid in flow, in which a source (1) emitting radiation is located between two cylindrical tubings (2, 3) through one (3) of which passes the fluid under supervision and through the other of which, hereinafter called the reference tubing (2), passes a reference fluid, and cells (4, 5) detective of this radiation are arranged respectively behind each tubing (2, 3), characterized in that the two tubings (2, 3) are each spaced at a distance from the emitting source (1) to give rise to an effect of focusing of the said radiation by the said tubings and each detective cell (4, 5) is arranged in the focal zone of the corresponding tubing.

2. An apparatus as in Claim 1, in which the source (1), the tubings (2, 3) and the cells (4, 5) are mounted in a block (13) in suitable respective seatings (14, 17, 18), characterized in that each tubing (2, 3) is fixed in its seating at its two opposite ends by means of seals (21) which surround it and which are compressed against its outer face.

3. An apparatus as in Claim 1, with which is employed as reference fluid the fluid under supervision after purification of it, characterized in that it includes first ($E_2$) and second ($E_1$) purifiers which are preferably identical and connected by pipework of which one pipe (24) connects the outlet from the first purifier ($E_2$) to the reference tubing (2), one pipe (25) connects the latter to the inlet to the second purifier ($E_1$) and one pipe (26) connects the outlet from this second purifier ($E_1$) to the tubing (3) of fluid under supervision.

4. An apparatus as in Claim 3, characterized in that the two purifiers ($E_1$, $E_2$) are of ion-exchange resin type and a supplementary pipe (24') as well as suitable valves enable the charged fluid to be made to arrive directly at the reference tubing (2) and the first purifier ($E_2$) to be isolated with a view to its regeneration.

**Patentansprüche**

1. Einrichtung zur Überwachung einer strömenden Flüssigkeit zur Detektion eines absorbierenden Stoffes, der mit der strömenden Flüssigkeit mitgeführt wird, wobei eine Strahlenquelle (1) mit einer Strahlung zwischen zwei zylindrischen Rohren (2, 3) angeordnet ist, von denen das eine (3) von der zu überwachenden Flüssigkeit durchströmt wird und das andere, das nachstehend als Bezugsrohr (2) bezeichnet wird, von einer Bezugsflüssigkeit durchströmt wird, und wobei Zellen (4, 5) zur Detektion dieser Strahlung hinter jedem der Rohre (2, 3) angeordnet sind, dadurch gekennzeichnet, daß die beiden Rohre (2, 3) im Abstand von der Strahlenquelle (1) in einer Entfernung angeordnet sind, die einen Anfangspunkt für einen Fokkusierungseffekt der Strahlung durch die Rohre ergibt, und daß jede Detektionszelle (4, 5) in dem Fokkusierungsbereich des entsprechenden Rohres angeordnet ist.

2. Einrichtung nach Anspruch 1, in welcher die Quelle (1), die Rohre (2, 3) und die Zellen (4, 5) in entsprechend geeigneten Aufnahmen (14, 17, 18) in einem Block (13) angeordnet sind, dadurch gekennzeichnet, daß jedes Rohr (2, 3) mit seinen beiden gegenüberliegenden Enden unbeweglich in seiner Aufnahme mit Hilfe von Dichtungen (21) angeordnet ist, welche die Rohre umfassen und welche gegen deren Außenfläche zusammengedrückt sind.

3. Einrichtung nach Anspruch 1, bei welcher man als Bezugsflüssigkeit die überwachte Flüssigkeit nach ihrer Reinigung verwendet, dadurch gekennzeichnet, daß sie einen ersten (E2) und einen zweiten (E1) Reiniger aufweist, die vorzugsweise identisch sind und die durch Leitungen verbunden sind, wobei eine Leitung (24) den Ausgang des ersten Reinigers (E2) mit der Bezugsleitung (2), eine Leitung (25) letztere mit dem Eingang des zweiten Reinigers (E1) und eine Leitung (26) den Ausgang des zweiten Reinigers (E2) mit dem Rohr (3) für die zu überwachende Flüssigkeit verbindet.

4. Einrichtung nach Anspruch 3, dadurch gekennzeichnet, daß die beiden Reiniger (E1, E2) vom Austauscherharz-Typ sind und daß eine zusätzliche Leitung (24') sowie geeignete Ventile vorgesehen sind, damit die belastete Flüssigkeit direkt zu dem Bezugsrohr (2) gelangen und der erste Reiniger (E2) zur Regenerierung abgetrennt werden kann.

0 059 140

*Fig.1*

*Fig.2*